# EUROPEAN PATENT APPLICATION

(11) **EP 1 087 595 A2**
(43) Date of publication of application: **28.03.2001**
(21) Application number: 00307563.7
(22) Date of filing: 01.09.2000
(51) Int. Cl.: H04M 3/42

(54) **Network connection control**

(30) Priority: 04.09.1999 GB 9920913
(71) Applicant: MARCONI COMMUNICATIONS LIMITED, Coventry, CV3 1HJ (GB)
(72) Inventor: Winch, Nicholas Richard, Styvechale, Coventry CV3 6FW (GB)
(74) Representative: Branfield, Henry Anthony

(57) **Abstract**

A telephone network has an interconnected plurality of subscriber telephones and a server, the server having voice recognition capability providing the ability to recognise the voice of a subscriber and to respond to voice commands from the subscriber so as to direct connections in and to the network.

## Description

Telecommunications networks have evolved considerably over the last few years and it is to be expected that this trend will continue, with new series and features being added into the foreseeable future.

In recent years the Internet has grown, and has made use of an addressing scheme which generally uses memorable names and mechanisms by which desired connections can be made simply, for example by the click of a mouse button on a personal computer.

The mobile telephone penetration also has grown rapidly, resulting in the use of small hand-held terminals, which contain a great deal of intelligence but which require considerable re-use of buttons, making it not user friendly in some instances.

Meanwhile, there remains a very large number of fixed telephone lines, whose capabilities are considerably limited by a lack of intelligence both in the terminal and in the signalling capabilities to the network.

As a solution for the ever increasing requirements for telephone numbers, thoughts are now being given to "Naming and Addressing" techniques, rather than "Numbering", thus recognising the benefits inherent in the internet approach and continuing the convergence of telecommunications towards a seamless whole. Many individual users use multiple numbers simply to run several services, such as office and private phones, facsimile, pager and mobile. Given the right intelligence, many of these can be seen as defined services which, with a single identified end user, merely have to identify the right termination to supply the service.

A major problem is the means by which this "quantum leap" can be applied to the fixed telephone population, and is the object of the proposal below.

According to the present invention there is provided a telephone network comprising an interconnected plurality of subscriber telephones and a server, the server having voice recognition capability providing the ability to recognise the voice of a subscriber and to respond to voice commands from the subscriber so as to direct connections in and to the network

The benefits of being a telephone customer in the early days were that one had an intelligent system operating the switchboard (a human operator) and one communicated in the most natural of ways (the human voice).

Modern voice recognition systems are now being implemented for many applications, and it is possible for systems to recognise not only the commands but also confirm the identity of the speaker.

Voice recognition may be loaded into the Subscriber Identification Module (SIM) card if a mobile telephone, thus allowing a security check against the user as well as converting short instructions into call set-up procedures. A SIM card may also be installed in a fixed telephone for the same purpose.
Current fixed network telephones are generally limited to key strokes for individual digit signals or for sending groups of digit signals representing a particular call number.

It is proposed here that, using a programmed key, use could be made of a simple service code (e.g. 111) to make an automatic call set up to a server within the network (either operated by the network provider or by an independent service provider) whereby a voice recognition service could be provided to set up call requests.

The service would use the Calling Line Identity (CLI) of the calling phone to identify the particular profile to be used - e.g. a list of personal names, in default of which some form of directory enquiry service could be invoked. The system could incorporate voice recognition to distinguish one of several profiles authorised from that terminal, and to bar use to other users. It could respond to service requests, such as "let me know when free", such commands developing ultimately to requests such as "video calls with associated white boards" as evolution takes on board more viable terminals, and the merge with the internet and other systems becomes complete.

This system could also be of use to people with certain forms of disability - e.g. mobility problems.

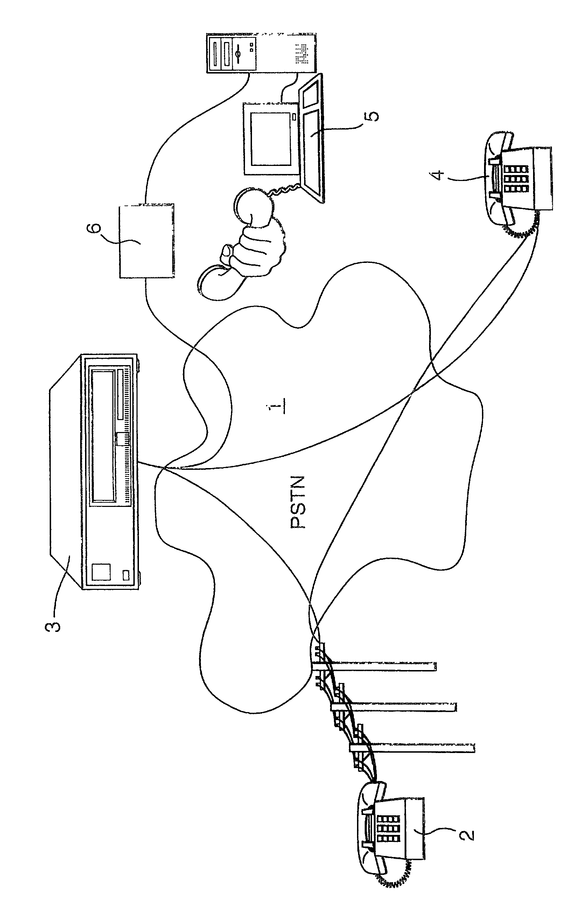

This system could also enable the setting up of calls between a telephone within the Public Switched Telephone Network (PSTN) and a Voice Over Internet Protocol (VoIP) service on the present Internet, whereby the voice recognition would respond to existing forms of internet addressing and cause the call to be routed to a suitable gateway.
The present invention will now be described by way of example, with reference to the attached single figure which shows a Public Switched Telephone Network (PSTN) illustrating the present invention.

A Public Switched Telephone Network (PSTN) (1) has connected thereto telephones (2, 4) and server (3). There is also connected to the PSTN (1) a Personal Computer (PC) (5) with voice capability, which PC forms part of an Internet Protocol (IP) network and is connected via a PSTN/IP gateway (6) to the PSTN (1) and thence to the server (3).

The server (3) has voice recognition capability. This means it can recognise the voice of a subscriber connected to it and respond to voice commands with which it has been programmed.

The telephone 2 has the capability to operate using the aforementioned service code "111" and then issue voice commands to the server (3) and hence be connected to the PC (5), Alternatively, if the telephone (2) has a SIM card connection could be made directly to the PC (5).

## Claims

1. A telephone network comprising an interconnected plurality of subscriber telephones and a server, the server having voice recognition capability providing the ability to recognise the voice of a subscriber and to respond to voice commands from the subscriber so as to direct connections in and to the network.

2. A telephone network as claimed in Claim 1, wherein the telephone network is a Public Switched Telephone Network (PSTN).

3. A telephone network as claimed in Claim 1 or 2, further comprising an Internet Protocol (IP) network, including a Personal Computer having voice capability and connected to the telephone network via a telephone network/IP gateway.

4. A telephone network as claimed in any preceding claim, wherein at least one of the plurality of interconnected subscriber telephones includes a Subscriber Identification Module (SIM) having voice recognition capability.
